# EUROPÄISCHE PATENTSCHRIFT

(11) **EP 1 164 727 B1**
(45) Veröffentlichungstag und Bekanntmachung des Hinweises auf die Patenterteilung: **09.04.2003**
(21) Anmeldenummer: 01112265.2
(22) Anmeldetag: 18.05.2001
(51) Int. Cl.: H04H 1/00

(54) **Verfahren und Vorrichtung zur Dekodierung von digitalen Audiodaten**
Method and apparatus for decoding digital audio data
Procedé et appareil pour décodage des dates audionumériques

(30) Priorität: 06.06.2000 DE 10027970
(43) Veröffentlichungstag der Anmeldung: 19.12.2001
(73) Patentinhaber: ROBERT BOSCH GMBH, 70442 Stuttgart (DE)
(72) Erfinder: Kupferschmidt, Claus, 30900 Widemarkt (DE); Mlasko, Torsten, 30982 Pattensen (DE)

(56) Entgegenhaltungen:
- EP-A- 0 910 208
- US-A- 6 061 451
- PATENT ABSTRACTS OF JAPAN vol. 1999, no. 13, 30. November 1999 (1999-11-30) & JP 11 239175 A (MATSUSHITA ELECTRIC IND CO LTD), 31. August 1999 (1999-08-31)

## Beschreibung

### Stand der Technik

Die Erfindung geht aus von einem Verfahren zur Dekodierung von digitalen Audiodaten bzw. einer Vorrichtung zur Dekodierung von digitalen Audiodaten nach der Gattung der unabhängigen Patentansprüche.

Bei DAB (Digital Audio Broadcasting), einem digitalen Rundfunkübertragungsverfahren, werden die übertragenen digitalen Audiodaten der Hörfunkprogramme nach MPEG-1/2-Layer 2 (MP2) dekodiert.

### Vorteile der Erfindung

Das erfindungsgemäße Verfahren zur Dekodierung von digitalen Audiodaten bzw. die erfindungsgemäße Vorrichtung zur Dekodierung von digitalen Audiodaten mit den Merkmalen der unabhängigen Patentansprüche hat demgegenüber den Vorteil, dass eine bestehende Hardware eines MP2-Dekoders auch zur Dekodierung von MP3-Daten verwendet wird. Damit wird es vorteilhafterweise möglich, Tonträger (CDs, Kassetten, Minidisc) mit MP3-Daten von einem Audiodekoder eines Rundfunkempfängers für DAB zu dekodieren. Weiterhin ist es von Vorteil, dass mittels eines Abtastratenumsetzers der erfindungsgemäßen Vorrichtung die Abtastrate der MP3-Daten auf die Abtastrate der MP2-Daten umgesetzt wird. Damit wird die weitere Verarbeitung der digitalen Audiodaten durch die vorhandene Hardware für den bereits existierenden MP2-Dekoder ermöglicht. Es ist jedoch auch eine Umsetzung auf andere Abtastraten möglich.

Durch die in den abhängigen Ansprüchen aufgeführten Maßnahmen und Weiterbildungen sind vorteilhafte Verbesserungen des im unabhängigen Patentanspruch angegebenen Verfahrens zur Dekodierung von digitalen Audiodaten bzw. der Vorrichtung zur Dekodierung von digitalen Audiodaten möglich.

Besonders vorteilhaft ist, dass ein Prozessor und ein Audiodekoder der erfindungsgemäßen Vorrichtung die MP3-Dekodierung übernehmen, während der Audiodekoder allein die Dekodierung der MP2-Daten vornimmt. Dadurch wird es ermöglicht, dass die rechenintensive Filterbank, die auf dem Audiodekoder für die MP2-Daten bereits realisiert ist, auch für die MP3-Daten verwendet werden kann. Damit werden vorteilhafterweise die Geschwindigkeitsvorteile durch die für die Filterung vorgesehene Hardware ausgenutzt.

Auch dass die MP2-Dekodierung weiterhin mit der verfügbaren Hardware vorgenommen werden kann, dient der effizienten Nutzung der erfindungsgemäßen Vorrichtung.

Darüber hinaus ist es von Vorteil, dass Seiteninformationen, die in den digitalen Audiodaten enthalten sind, ausgewertet werden, welche Dekodierdaten jeweils für die Dekodierung der MP2- bzw. MP3-Daten genutzt werden. Bei MP2-Daten wird die Dekodierung mittels einer Dequantisierung vorgenommen, während bei MP3-Daten zusätzlich eine Huffman-Dekodierung durchgeführt wird. Die Dekodiertabellen, die dafür verwendet werden, sind in den Seiteninformationen genannt.

Darüber hinaus ist es von Vorteil, dass aus den Skalenfaktoren auf die die Abtastwerte bezogen sind, zur Ermittlung eines Fehlermaßes verwendet werden, um damit Entzerrerwerte bei der Dequantisierung einzustellen.

Weiterhin ist es von Vorteil, dass die digitalen Audiodaten in Rahmen übertragen werden, so dass mittels dieser vorgegebenen Struktur eine systematische Auswertung der digitalen Audiodaten ermöglicht wird.

Darüber hinaus ist es von Vorteil, dass durch die Steuerung der erfindungsgemäßen Vorrichtung eine MP3-Dekodierung unterbrochen wird, falls Verkehrsfunknachrichten, die in MP2 dekodiert oder in FM-Signalen enthalten sind, empfangen werden. Dafür ist der Empfänger, mit dem die erfindungsgemäße Vorrichtung verbunden ist, in einem Schnüffelmodus, so dass die Steuerung bei der Erkennung von Verkehrsfunknachrichten von dem Empfänger benachrichtigt wird, um die MP3-Dekodierung zu unterbrechen.

Weiterhin ist es von Vorteil, dass der Audiodekoder von der Steuerung in zwei verschiedene Zustände geschaltet wird, je nach dem, welche Dekodierung vorgenommen werden soll, also entweder MP2- oder MP3-Dekodierung. Damit wird es ermöglicht, dass nur die notwendige Hardware des Audiodekoders für die entsprechende Dekodierung verwendet wird. Das ist bei der MP2-Dekodierung die gesamte Hardware des Audiodekoders und bei der MP3-Dekodierung allein die Filterbank, die auf dem Audiodekoder realisiert ist.

Darüber hinaus ist es von Vorteil, dass ein Empfänger mit der erfindungsgemäßen Vorrichtung verbunden ist, der dann MP2-Daten und gegebenenfalls FM-Signale liefert, während ein Abspielgerät (CD-ROM-Laufwerk, Minidiscplayer, Kassettenlaufwerk), das auch mit der erfindungsgemäßen Vorrichtung verbunden ist, MP3-Daten ausgibt.

Weiterhin ist es von Vorteil, dass der Prozessor der erfindungsgemäßen Vorrichtung einen RISC (Reduced Instruction Set Computer) und einen digitalen Signalprozessor aufweist, die bereits für andere Aufgaben verwendet werden und die bei der MP3-Dekodierung die notwendigen Dekodierschritte, die auf dem Audiodekoder nicht ausgeführt werden können, durchführen. Zu den Aufgaben, die der Prozessor weiterhin durchführt, zählen eine Zeit- und Frequenzsynchronisation.

Schließlich ist es auch von Vorteil, dass dem Audiodekoder ein Speicher vorgeschaltet ist, mit dem bei der MP2-Dekodierung im Falle von fehlerhaften digitalen Audiodaten eine Umschaltung und damit eine Fehlerverschleierung vorgenommen werden kann. Dies wird so durchgeführt, dass die Audiodaten in zwei Puffer des Speichers geladen werden und je nachdem, wie fehlerhaft die digitalen Audiodaten sind, wird dann alternativ direkt auf den zweiten Puffer umgeschaltet, um nicht die fehlerhaften digitalen Audiodaten aus dem ersten Puffer zu dekodieren.

### Zeichnung

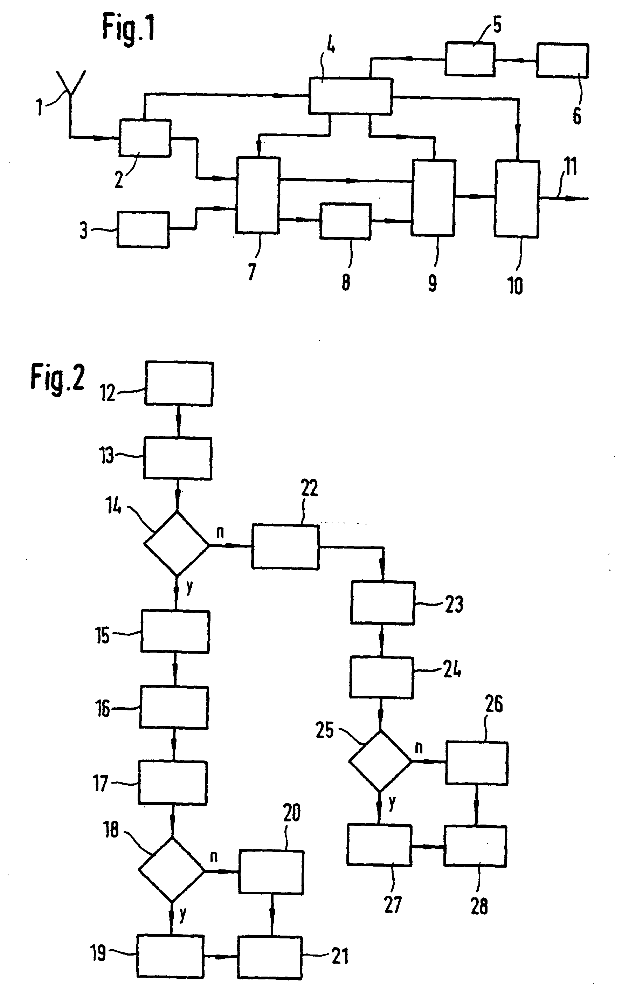

Ausführungsbeispiele der Erfindung sind in der Zeichnung dargestellt und werden in der nachfolgenden Beschreibung näher erläutert. Es zeigt Figur 1 ein Blockschaltbild der erfindungsgemäßen Vorrichtung und Figur 2 ein Flußdiagramm des erfindungsgemäßen Verfahrens.

### Beschreibung

Rundfunkempfänger für DAB (Digital Audio Broadcasting) sind für die Dekodierung von digitalen Audiodaten ausgelegt, die nach MPEG-1/2-Layer 2, im Folgenden als MP2 bezeichnet, kodiert sind. D.h., die Audiodaten, die die Audioinformation der Rundfunkprogramme, die mittels DAB übertragen werden, tragen, sind nach MP2 kodiert. Neuerdings setzt sich jedoch MP3 als eine effiziente, mit guter Audioqualität versehene Kodierung im Bereich der Kompressionsverfahren immer weiter durch. MP3 wird voll ausgeschrieben mit MPEG-1/2 Layer3 bezeichnet.

Erfindungsgemäß wird daher zusätzlich zur vorhandenen MP2-Dekodierung eine MP3-Dekodierung mittels eines bereits vorhandenen Prozessors implementiert. Dabei wird der Audiodekoder, der für eine MP2-Dekodierung verwendet wird, zum Teil auf für die MP3-Dekodierung verwendet und dabei insbesondere für den rechenintensivsten Teil der Audiodekodierung, die Filterbank. Weiterhin ist ein Abtastratenumsetzer eingesetzt, um die Abtastrate, mit der MP3-Daten kodiert werden auf die Abtastrate von MP2-Daten umzusetzen. In einer Weiterbildung der erfindungsgemäßen Vorrichtung ist vorgesehen, dass die Vorrichtung neben digitalen Rundfunksignalen auch FM-Rundfunksignale empfängt, um bei einem schlechten Empfang von digitalen Rundfunksignalen entsprechende FM-Rundfunksignale zu empfangen.

In Figur 1 ist als Blockschaltbild die erfindungsgemäße Vorrichtung dargestellt. Eine Antenne 1 ist an einen Eingang eines DAB-Empfängers 2. angeschlossen. Ein erster Datenausgang des DAB-Empfängers 2 geht an einen ersten Dateneingang einer Steuerung 4. Ein zweiter Datenausgang des DAB-Empfängers 2 führt an einen ersten Dateneingang eines Schalters 7. An einen zweiten Dateneingang des Schalters 7 ist ein Abspielgerät 3 für Tonträger angeschlossen. An einen dritten Dateneingang des Schalters 7 ist die Steuerung 4 angeschlossen. An einen ersten Datenausgang des Schalters 7 ist ein Prozessor 8 angeschlossen. Ein zweiter Datenausgang des Schalters 7 führt zu einem Audiodekoder 9. Ein Datenausgang des Prozessors 8 führt zu einem zweiten Dateneingang des Audiodekoders 9. An einen dritten Dateneingang des Audiodekoders 9 ist die Steuerung 4 angeschlossen.

Ein Datenausgang des Audiodekoders 9 ist an einen ersten Dateneingang eines Abtastratenumsetzers 10 angeschlossen. An einen zweiten Dateneingang des Abtastratenumsetzers 10 ist die Steuerung 4 angeschlossen. An einen zweiten Dateneingang der Steuerung 4 ist eine Signalverarbeitung 5 angeschlossen. An einen Dateneingang der Signalverarbeitung 5 ist eine Eingabevorrichtung 6 angeschlossen. Ein Datenausgang 11 des Abtastratenumsetzers 10 steht zum Anschluß an einen Digital/Analog-Umsetzer oder einen Multimediabus zur Verfügung.

Die mittels der Antenne 1 empfangenen digitalen Rundfunksignale werden von dem Empfänger 2 verstärkt, gefiltert, in eine Zwischenfrequenz umgesetzt und digitalisiert. Weiterhin entnimmt der DAB-Empfänger 2 aus den digitalen Rundfunksignalen die digitalen Audiosignale, die dekodiert werden sollen. Diese digitalen Audiosignale werden zu dem Schalter 7 übertragen. Der Schalter 7 wird mittels der Steuerung 4 gesteuert. Die Steuerung 4 wiederum ist über die Signalverarbeitung 5 mit einer Eingabevorrichtung 6 verbunden. Mittels der Eingabevorrichtung 6 nimmt ein Benutzer Eingaben vor, ob der Benutzer im Moment Rundfunkprogramme oder digitale Audiodaten von dem Abspielgerät 3 hören möchte. Je nachdem, welche Eingaben der Benutzer mittels der Eingabevorrichtung 6 macht, schaltet die Steuerung 4 den Schalter 7, um Einund Ausgänge zu schließen beziehungsweise zu öffnen. Die Eingabevorrichtung 6 ist hier eine Tastatur, es ist jedoch auch eine Sprachsteuerung möglich.

Sollen digitale Audiodaten, die in den digitalen Rundfunksignalen enthalten sind, dekodiert werden, dann schaltet die Steuerung 4 den Schalter 7 derart, dass nur der erste Dateneingang des Schalters 7 frei geschaltet wird und auch nur der erste Datenausgang. Damit werden die digitalen Audiodaten direkt zum Audiodekoder 9 übertragen. Der Audiodekoder 9 nimmt die MP2-Dekodierung der digitalen Audiodaten vor. Die so dekodierten Audiodaten werden zum digitalen Abtastratenumsetzer 10 übertragen. Die Steuerung 4 sorgt dafür, dass der Audiodekoder 9 seine volle Hardware zur Dekodierung der digitalen Audiodaten nutzt, da es sich um MP2-Daten handelt. Der Abtastratenumsetzer 10 wird in einen Zustand geschaltet, so dass die MP2-Daten, die dekodiert wurden, ohne Veränderung der Abtastrate zum Ausgang 11 übertragen werden.

MP2-Daten sind mit einer Abtastrate von 48 kHz erzeugt worden, und diese Abtastrate wird hier in der erfindungsgemäßen Vorrichtung zur Weiterverarbeitung verwendet. Soll beispielsweise der Datenstrom aus den MP2-Daten auf einen Multimediabus übertragen werden, dann wird der Abtastratenumsetzer 10 von der Steuerung 4 derart angesteuert, dass er die Abtastrate der MP2-Daten, also 48 kHz, auf die Abtastrate des Multimediabusses, beispielsweise 44,1 kHz, umsetzt.

Hat nun der Benutzer mittels der Eingabevorrichtung 6 angegeben, dass er Audiodaten von dem Abspielgerät 3 hören möchte, die nach MP3 kodiert sind, dann schaltet die Steuerung 4 ihren zweiten Dateneingang derart, dass die Daten von dem Abspielgerät 3 von dem Schalter 7 über seinen zweiten Datenausgang zum Prozessor 8 gelangen. Das Abspielgerät 3 ist hier ein CD-Laufwerk. Alternativ sind auch andere Laufwerke, wie ein Minidisc-Laufwerk, möglich.

Der Prozessor 8 führt nun Teile der Audiodekodierung für MP3-Daten durch. Dann überträgt der Prozessor 8 diese teilweise dekodierten MP3-Daten zu dem Audiodekoder 9, der den letzten Schritt der Audiodekodierung, nämlich die Filterung mittels der Filterbank durchführt. Dafür schaltet die Steuerung 4 den Audiodekoder 9 in einen Zustand, so dass allein die Filterbank für die Dekodierung der Audiodaten verwendet wird. Nach der Dekodierung überträgt der Audiodekoder 9 die dekodierten MP3-Daten zu dem Abtastratenumsetzer 10, der je nach einem Signal von der Steuerung 4 die dekodierten MP3-Daten auf eine andere Abtastrate umsetzt. Dann werden die dekodierten MP3-Daten auf den Ausgang 11 ausgegeben.

In Figur 2 ist das erfindungsgemäße Verfahren zur Dekodierung von digitalen Audiodaten als Flußdiagramm dargestellt. In Verfahrensschritt 12 gibt der Benutzer eine Eingabe mittels der Eingabevorrichtung 6 ein. In Verfahrensschritt 13 wird diese Eingabe von der Eingabevorrichtung 6 in ein Signal umgewandelt, um dann von der Signalverarbeitung 5 in einen Befehl umformatiert zu werden. Dieser Befehl wird dann an die Steuerung 4 übertragen.

Die Steuerung 4 überprüft in Verfahrensschritt 14 in Abhängigkeit von der Eingabe des Benutzers, ob Audiosignale aus den Rundfunksignalen, also MP2-Signale, dekodiert werden sollen oder nicht. Ist das der Fall, dann wird in Verfahrensschritt 15 der Schalter 7 derart geschaltet, dass der erste Dateneingang des Schalters 7 auf Durchgang geschaltet wird, so dass die digitalen Audiodaten aus den digitalen Rundfunksignalen über den ersten Datenausgang des Schalters 7 direkt zum Audiodekoder 9 gelangen.

Der Audiodekoder 9 wird in Verfahrensschritt 16 von der Steuerung 4 derart beschaltet, so dass seine volle Hardware für die Dekodierung der digitalen Audiodaten, der MP2-Daten verwendet wird. Zunächst führt der digitale Audiodekoder ein Demultiplexen der digitalen Audiodaten durch, d.h. aus den Rahmen, mit denen die digitalen Audiodaten übertragen werden, wird die Seiteninformation, die Informationen über die digitalen Audiodaten enthält, unter anderem, welche Dekodiertabellen verwendet werden sollen, ausgewertet, und mittels dieser Auswertung werden die digitalen Audiodaten dann den weiteren Dekodierschritten zugeführt. D.h. durch das Demultiplexen werden die digitalen Audiodaten von den übrigen Daten wie die Seiteninformationen getrennt. Weiterhin wird zunächst auch eine Fehlerbehandlung anhand der Skalenfaktoren durchgeführt, um gegebenenfalls bei der Dequantisierung eine entsprechend dem sich daraus ergebenden Fehlermaß eine Entzerrung durchzuführen.

Bei DAB werden die übertragenen Audiosignale auf Skalenfaktoren bezogen. Es findet also eine Normierung statt. Liegen dabei mehrere Skalenfaktoren bei dem gleichen oder einem sehr ähnlichen Wert, dann werden für diese Abtastwerte jeweils nur ein Skalenfaktor übertragen, auf den dann die Abtastwerte im Empfänger denormiert werden.

Bei DAB (Digital Audio Broadcasting) werden sendeseitig die Audiosignale in Frequenzbereiche aufgeteilt. Für jeden Frequenzbereich wird der Frequenzwert mit der größten Signalleistung als Skalenfaktor verwendet. Die übrigen Signalwerte in diesem Frequenzbereich werden auf diesen Skalenfaktor normiert. Damit wird der Abstand von der kleinsten Signalleistung zur größten Signalleistung erheblich reduziert. Die Skalenfaktoren werden dann mit den normierten Audiodaten zum Empfänger hin übertragen.

Ist die zeitliche Abfolge der Skalenfaktoren innerhalb eines Rahmens gleich oder sehr ähnlich, dann wird für diesen Frequenzbereich nur ein Skalenfaktor übertragen, um Übertragungskapazität einzusparen. Bei DAB werden für einen Frequenzbereich (engl. Subband) 36 zeitlich aufeinanderfolgende Abtastwerte genommen und in drei Gruppen zu je zwölf Abtastwerten aufgeteilt. Für jede Gruppe wird ein Skalenfaktor definiert. Sind zwei oder gar alle drei Skalenfaktoren gleich oder zumindest sehr ähnlich, dann wird dann nur jeweils ein Skalenfaktor übertragen. In dem DAB-Rahmen ist vermerkt für welche Gruppen von Abtastwerten ein Skalenfaktor gilt.

Bei DAB, wie auch bei anderen digitalen Übertragungs- und Aufzeichnungsverfahren werden die Audiosignale quantisiert. Dabei wird eine nichtlineare Quantisierung durchgeführt, wobei eine psychoakustische Quantisierungskurve zugrunde gelegt wird. Es werden Geräusche, die sich in der Nähe in Bezug auf die Frequenz zu einem aus dem Klangspektrum herausragenden Ton befinden, durch das Ohr nicht mehr wahrgenommen. Dies bezeichnet man als die Mithörschwelle. Dadurch ist es möglich, die Datenrate zu reduzieren, indem solche Geräusche, die unter der Mithörschwelle liegen, aus den Daten entfernt werden. Es werden dabei auch die verschiedenen Frequenzbereiche unterschiedlich fein quantisiert, wobei die Feinheit der Quantisierung dadurch bestimmt ist, daß das Quantisierungsrauschen noch unterhalb der Mithörschwelle liegt. Aus dieser unterschiedlichen Quantisierung pro Frequenzbereich ergibt sich, daß unterschiedlich viele Bits pro Frequenzbereich zuzuweisen sind. Zum Beispiel schwankt die Bitzuweisung pro Frequenzbereich zwischen 3 und 16 Bit.

Die MP2-Daten werden dann dequantisiert und deskaliert mittels der Skalenfaktoren. Im folgenden Schritt werden dann die digitalen Audiodaten einer Filterbank zugeführt, um gefiltert zu werden, wobei eine inverse modifizierte diskrete Kosinustransformation verwendet wird. Der Filterbank vorgeschaltet ist ein Speicher, der zwei Speicherzonen aufweist, wobei, wenn die digitalen Audiodaten in einer Speicherzone als fehlerhaft erkannt werden, auf die digitalen Audiodaten der anderen Speicherzone zurückgegriffen wird.

In Verfahrensschritt 18 wird dann von der Steuerung 4 überprüft, ob der Abtastratenumsetzer 10 die Abtastrate der dekodierten MP2-Daten umsetzen soll oder nicht. Ist das der Fall, dann wird in Verfahrensschritt 19 die Abtastrate von dem Abtastratenumsetzer 10 umgesetzt, um dann in Verfahrensschritt 21 am Ausgang 11 des Abtastratenumsetzers 10 die dekodierten MP2-Daten weiter zu verarbeiten, beispielsweise sie dann wiederzugeben. Wurde in Verfahrensschritt 18 festgestellt, dass keine Abtastratenumsetzung von dem Abtastratenumsetzer 10 vorgenommen werden soll, dann werden in Verfahrensschritt 20 die MP2-Daten transparent zum Ausgang 11 durchgeschaltet. In Verfahrensschritt 21 werden dann die dekodierten MP2-Daten weiter verarbeitet.

Wurde in Verfahrensschritt 14 festgestellt, dass der Benutzer nicht MP2-Daten, sondern MP3-Daten von dem Abspielgerät 3 hören möchte, dann wird in Verfahrensschritt 22 der Schalter 7 so geschaltet, dass der MP3-Datenstrom von dem Abspielgerät 3 zu dem Prozessor 8 durchgeschaltet wird. In Verfahrensschritt 23 führt dann der Prozessor 8 erste Audiodekodierschritte durch. Dazu gehört zunächst ein Demultiplexen, um die Seiteninformation von den eigentlichen Audiodaten zu trennen und eine Fehlerbehandlung. Dann werden die eigentlichen Audiodaten mit einer nichtlinearen Dequantisierung und einer Huffmandekodierung im Prozessor 8 dekodiert. Dabei wird wiederum die Seiteninformation ausgenutzt, welche Dekodiertabellen zu verwenden sind. Dann folgt die Deskalierung, wobei in den Seiteninformationen enthalten ist, welche Skalenfaktoren für welche Abtastwerte zu verwenden sind. Dann folgt eine inverse modifizierte diskrete Kosinustransformation, die dann die Aufgaben des Prozessors 8 für die Audiodekodierung abschließt. Der Zweck der inversen modifizierten diskreten Kosinustransformation an dieser Stelle ist eine feinere Frequenzauflösung, die zu einer besseren Audioqualität führt. Darüber hinaus wird je nach Signalisierung in den Seiteninformationen eine der Kodierung entsprechende Fensterung der Audiodaten vorgenommen. Diese Fensterung wurde im Sender anhand des Signals angepaßt. Lag beispielsweise ein impulsartiges Signal vor, wurde ein kurzes Fenster verwendet, lag ein rauschähnliches Fenster vor, dann wurde ein langes Fenster verwendet. Die so behandelten MP3-Daten werden dann zum Audiodekoder 9 übertragen.

Die Huffman-Codierung als Quellencodierung ordnet den zu codierenden Daten je nach Häufigkeit unterschiedlich viele Bits zu. Bei einem häufig vorkommenden Datum wie dem Buchstaben E wird eine sehr kurze Bitfolge als Codewort verwendet, während für einen vergleichsweise selten vorkommenden Buchstaben wie das X eine längere Bitfolge zur Bildung des Codeworts eingesetzt werden kann. Dies führt zu einer effizienten Datenreduktion.

In Verfahrensschritt 24 wird der Audiodekoder 9 von der Steuerung 4 in den Zustand geschaltet, dass der Audiodekoder 9 allein die Filterbank zur Verarbeitung der MP3-Daten verwendet. In Verfahrensschritt 25 wird dann überprüft, ob eine Abtastratenumsetzung der MP3-Daten vorgenommen werden soll. Ist das der Fall, dann wird in Verfahrensschritt 27 die Abtastrate der MP3-Daten von dem Abtastratenumsetzer 10 auf die vorgegebene Abtastrate umgesetzt, um dann am Ausgang 11 weiter verarbeitet zu werden. Ist das nicht der Fall, dann werden die MP3-Daten transparent durchgeschaltet, um am Ausgang 11 dann in Verfahrensschritt 28 weiter verarbeitet zu werden.

In einer Weiterbildung der Erfindung ist vorgesehen, dass der DAB-Empfänger 2 in einem Schnüffelmodus arbeitet, d.h. in kurzen Zeitschlitzen prüft der DAB-Empfänger, ob in den empfangenen Daten Verkehrsfunknachrichten oder andere relevante Informationen enthalten sind, die es notwendig machen, dass eine MP3-Dekodierung unterbrochen wird, um diese in MP2-codierten Informationen zu dekodieren und wiederzugeben. Dazu weist der DAB-Empfänger auch Mittel auf, um im FM-Bereich nach Verkehrsnachrichten zu suchen, die dort beispielsweise im RDS (Radio Data Signal) signalisiert sind. Für FM-Signale ist von den Audiodekodiereinrichtungen für die MP2- und MP3-Daten allein der Abtastratenumsetzer und der dem Audiodekoder vorgeschaltete Speicher mit zwei Speicherzonen verwendbar.

Die MP3-Dekodierung wird dann nach der Wiedergabe dieser Informationen wieder aufgenommen. Erkennt der DAB-Empfänger 2 solche Informationen in den empfangenen Rundfunksignalen, dann überträgt der DAB-Empfänger 2 ein entsprechendes Signal an die Steuerung 4, um den Schalter 7, den Audiodekoder 9 und den Abtastratenumsetzer 10 für die MP2-Dekodierung zu beschalten.

## Patentansprüche

1. Verfahren zur Dekodierung von digitalen Audiodaten, die entweder nach MP2 oder MP3 kodiert sind, **dadurch gekennzeichnet, dass** mittels eines Prozessors (8) ein erster Teil der Dekodierung von MP3-Daten durchgeführt wird, dass mittels eines Audiodekoders (9) MP2-Daten dekodiert werden und ein zweiter Teil der Dekodierung der MP3-Daten durchgeführt wird, dass die Dekodierung der MP2- und der MP3-Daten mittels einer Steuerung (4) gesteuert wird und dass gegebenenfalls mittels eines Abtastratenumsetzers (10) die dekodierten Audiodaten auf eine vorgegebene Taktrate umgesetzt werden.

2. Verfahren nach Anspruch 1, **dadurch gekennzeichnet, dass** mittels des Prozessors (8) die MP3-Daten einem Demultiplexen, einer Fehlerbehandlung, eine Dequantisierung, einer Huffman-Dekodierung, einer Deskalierung und einer inversen, modifizierten diskreten Kosinustransformation unterzogen werden, dass an den MP3-Daten mittels des Audiodekoders (9) eine Filterung durchgeführt wird, dass mittels des Audiodekoders (9) an den MP2-Daten ein Demultiplexen, eine Dequantisierung, eine Deskalierung und eine Filterung durchgeführt wird.

3. Verfahren nach Anspruch 1 oder 2, **dadurch gekennzeichnet, dass** für die MP3-Daten durch den Prozessor (8) und für die MP2-Daten durch den Audiodekoder (9) aus Seiteninformationen ermittelt wird, welche gespeicherten Dekodierdaten zur Huffman-Dekodierung beziehungsweise zur Dequantisierung zu wählen sind.

4. Verfahren nach Anspruch 3, **dadurch gekennzeichnet, dass** mittels der Skalenfaktoren, die für die Deskalierung verwendet werden, ein Fehlermaß ermittelt wird.

5. Verfahren nach Anspruch 4, **dadurch gekennzeichnet, dass** in Abhängigkeit von dem Fehlermaß die MP2-Daten bei der Dequantisierung entzerrt werden.

6. Verfahren nach einem der vorhergehenden Ansprüche, **dadurch gekennzeichnet, dass** die digitalen Audiodaten in Rahmen dekodiert werden und dass die Rahmen aus den Seiteninformationen und den digitalen Audiodaten gebildet werden.

7. Verfahren nach einem der vorhergehenden Ansprüche, **dadurch gekennzeichnet, dass** mittels der Steuerung (4) eine MP3-Dekodierung für eine MP2-Dekodierung oder einer Wiedergabe von FM-Signalen unterbrochen wird, falls mittels eines Empfängers (2) Verkehrsnachrichten empfangen werden.

8. Verfahren nach einem der vorhergehenden Ansprüche, **dadurch gekennzeichnet, dass** durch die Steuerung (4) der Audiodekoder (9) für die MP2-Dekodierung in einen ersten Zustand geschaltet wird und für die MP3-Dekodierung in einen zweiten Zustand.

9. Vorrichtung zur Dekodierung von digitalen Audiodaten, die entweder nach MP2 oder MP3 kodiert sind, **dadurch gekennzeichnet, dass** die Vorrichtung einem Prozessor (8) für die Dekodierung der MP3-Daten, einen Audiodekoder (9) für die Dekodierung der MP2-Daten und der MP3-Daten, eine Steuerung (4) für die Steuerung der Audiodekodierung und einen Abtastratenumsetzer (10) für eine Umsetzung der dekodierten Audiodaten auf eine vorgegebene Taktrate aufweist.

10. Vorrichtung nach Anspruch 9, **dadurch gekennzeichnet, dass** die Vorrichtung mit einem Abspielgerät (3), das MP3-Daten ausgibt und mit einem Empfänger (2), der digitale Rundfunksignale, die MP2-Daten aufweisen, und gegebenenfalls FM-Signale empfängt, verbunden ist.

11. Vorrichtung nach Anspruch 10, **dadurch gekennzeichnet, dass** die Steuerung (4) derart ausgebildet ist, dass die Steuerung (4) eine MP3-Dekodierung für eine MP2-Dekodierung oder für eine Wiedergabe von FM-Signalen unterbricht, falls der Empfänger (2) Verkehrsnachrichten empfängt.

12. Vorrichtung nach einem der Ansprüche 9 bis 11, **dadurch gekennzeichnet, dass** der Prozessor (8) derart ausgebildet ist, dass der Prozessor (8) ein Demultiplexen, eine Fehlerbehandlung, eine Auswertung der Seiteninformation, eine Dequantisierung, eine Huffman-Dekodierung, eine Deskalierung und eine inverse, modifizierte, diskrete Kosinustransformation an den MP3-Daten ausführt.

13. Vorrichtung nach einem der Ansprüche 9 bis 12, **dadurch gekennzeichnet, dass** die Steuerung (4) derart ausgebildet ist, dass die Steuerung (4) den Audiodekoder (9) für die MP2-Dekodierung in einen ersten Zustand schaltet, so dass der Audiodekoder (9) ein Demultiplexen einer Auswertung der Seiteninformation, eine Dequantisierung, eine Deskalierung und eine Filterung an den MP2-Daten ausführt und dass die Steuerung (4) den Audiodekoder (9) für die MP3-Dekodierung in einen zweiten Zustand schaltet, so dass der Audiodekoder (9) an den MP3-Daten die Filterung ausführt.

14. Vorrichtung nach einem der Ansprüche 9 bis 13, **dadurch gekennzeichnet, dass** der Prozessor (8) einen RISC-Prozessor und einen digitalen Signalprozessor aufweist.

15. Vorrichtung nach Anspruch 14, **dadurch gekennzeichnet, dass** der Prozessor (8) Mittel aufweist, um für den Empfänger (2) die Zeit- und Frequenzsynchronisation auszuführen.

16. Vorrichtung nach Anspruch 14, **dadurch gekennzeichnet, dass** dem Audiodekoder (9) ein Speicher vorgeschaltet ist.

## Claims

1. Method for decoding digital audio data which have been coded on the basis of either MP2 or MP3, **characterized in that** a processor (8) is used to perform a first part of the decoding of MP3 data, **in that** an audio decoder (9) is used to decode MP2 data and to perform a second part of the decoding of the MP3 data, **in that** the decoding of the MP2 data and of the MP3 data is controlled using a controller (4), and **in that** the decoded audio data are converted to a prescribed clock rate, possibly using a sampling-rate converter (10).

2. Method according to Claim 1, **characterized in that** the processor (8) is used to subject the MP3 data to demultiplexing, to error handling, to dequantization, to Huffman decoding, to descaling and to inverse, modified discrete cosine transformation, **in that** the MP3 data are filtered using the audio decoder (9), **in that** the audio decoder (9) is used to demultiplex, to dequantize, to descale and to filter the MP2 data.

3. Method according to Claim 1 or 2, **characterized in that** page information is used by the processor (8), for the MP3 data, and by the audio decoder (9), for the MP2 data, to ascertain which stored decoding data need to be chosen for Huffman decoding and for dequantization.

4. Method according to Claim 3, **characterized in that** the scale factors used for descaling are used to ascertain a degree of error.

5. Method according to Claim 4, **characterized in that** the MP2 data are equalized during dequantization on the basis of the degree of error.

6. Method according to one of the preceding claims, **characterized in that** the digital audio data are decoded in frames, and **in that** the frames are formed from the page information and from the digital audio data.

7. Method according to one of the preceding claims, **characterized in that** the controller (4) is used to interrupt MP3 decoding for MP2 decoding or reproduction of FM signals if a receiver (2) is being used to receive traffic messages.

8. Method according to one of the preceding claims, **characterized in that** the controller (4) switches the audio decoder (9) to a first state for MP2 decoding and to a second state for MP3 decoding.

9. Apparatus for decoding digital audio data which have been coded on the basis of either MP2 or MP3, **characterized in that** the apparatus features a processor (8) for decoding the MP3 data, an audio decoder (9) for decoding the MP2 data and the MP3 data, a controller (4) for controlling the audio decoding and a sampling-rate converter (10) for converting the decoded audio data to a prescribed clock rate.

10. Apparatus according to Claim 9, **characterized in that** the apparatus is connected to a playback unit (3) which outputs MP3 data and to a receiver (2) which receives digital broadcast radio signals, containing MP2 data, and possibly FM signals.

11. Apparatus according to Claim 10, **characterized in that** the controller (4) is designed such that the controller (4) interrupts MP3 decoding for MP2 decoding or for reproducing FM signals if the receiver (2) is receiving traffic messages.

12. Apparatus according to one of Claims 9 to 11, **characterized in that** the processor (8) is designed such that the processor (8) performs demultiplexing, error handling, evaluation of the page information, dequantization, Huffman decoding, descaling and inverse, modified, discrete cosine transformation on the MP3 data.

13. Apparatus according to one of Claims 9 to 12, **characterized in that** the controller (4) is designed such that the controller (4) switches the audio decoder (9) to a first state for MP2 decoding, so that the audio decoder (9) performs demultiplexing, evaluation of the page information, dequantization, descaling and filtering on the MP2 data, and **in that** the controller (4) switches the audio decoder (9) to a second state for MP3 decoding, so that the audio decoder (9) filters the MP3 data.

14. Apparatus according to one of Claims 9 to 13, **characterized in that** the processor (8) features a RISC processor and a digital signal processor.

15. Apparatus according to Claim 14, **characterized in that** the processor (8) features means for performing the time and frequency synchronization for the receiver (2).

16. Apparatus according to Claim 14, **characterized in that** the audio decoder (9) has a memory connected upstream of it.

## Revendications

1. Procédé de décodage de données audionumériques en code MP2 ou MP3,
**caractérisé en ce qu'**
à l'aide d'un processeur (8) on effectue une première partie du décodage des données MP3,
à l'aide d'un décodeur audio (9) on décode les données MP2 et on effectue une seconde partie du décodage des données MP3,
le décodage des données MP2 et des données MP3 est commandé par une commande (4) et
le cas échéant à l'aide d'un convertisseur à détection (10) on convertit les données audio décodées à une vitesse de cadence prédéterminée.

2. Procédé selon la revendication 1,
**caractérisé en ce qu'**
à l'aide du processeur (8) on soumet les données MP3 à un démultiplexage, à un traitement d'erreur, à une déquantification, à un décodage Huffman, à une démultiplication inverse et à une transformation cosinus discrète modifiée inverse,
on effectue un filtrage sur les données MP3 à l'aide du décodeur audio (9) et à l'aide du décodeur audio (9) on effectue sur les données MP2 un démultiplexage, une déquantification, une démultiplication inversée et un filtrage.

3. Procédé selon les revendications 1 ou 2,
**caractérisé en ce qu'**
à partir des informations latérales pour les données MP3 par le processeur (8) et pour les données MP2 par le décodeur audio (9), on détermine quelles données décodées enregistrées doivent être sélectionnées pour le décodage Huffman ou une déquantification.

4. Procédé selon la revendication 3,
**caractérisé en ce qu'**
on détermine une mesure d'erreur par des rapports de démultiplication utilisés pour la démultiplication inverse.

5. Procédé selon la revendication 4,
**caractérisé en ce qu'**
en fonction de la mesure de l'erreur on corrige les données MP2 lors de la déquantification.

6. Procédé selon l'une des revendications précédentes,
**caractérisé en ce qu'**
on décode les données audionumériques en trames et on forme les trames à partir des informations latérales et des données audionumériques.

7. Procédé selon l'une des revendications précédentes,
**caractérisé en ce qu'**
à l'aide de la commande (4) on interrompt un décodage MP3 pour un décodage MP2 ou d'une reproduction de signaux FM, lorsqu'un récepteur (2) reçoit des informations de circulation.

8. Procédé selon l'une des revendications précédentes,
**caractérisé en ce que**
la commande (4) commute le décodeur audio (9) dans un premier état pour le décodage MP2 et dans un second état pour le décodage MP3.

9. Dispositif de décodage de données audionumériques en codage MP2 ou MP3,
**caractérisé en ce que**
le dispositif comporte un processeur (8) pour le décodage des données MP3, un décodeur audio (9) pour le décodage des données MP2 et des données MP3, une commande (4) pour commander le décodage audio et un convertisseur de taux de détection (10) pour convertir les données audio décodées sur une vitesse de cadence prédéterminée.

10. Dispositif selon la revendication 9,
**caractérisé en ce qu'**
il est relié à un appareil de lecture (3) fournissant les données MP3 et à un récepteur (2) recevant les signaux radionumériques contenant les données MP2, et le cas échéant recevant des signaux FM.

11. Dispositif selon la revendication 10,
**caractérisé en ce que**
la commande est réalisée de façon à interrompre un décodage MP3 pour un décodage MP2 ou pour une reproduction de signaux FM si le récepteur (2) reçoit des informations de circulation.

12. Dispositif selon l'une des revendications 9 à 11,
**caractérisé en ce que**
le processeur (8) effectue un démultiplexage, un traitement d'erreur, une exploitation de l'information latérale, une déquantification, un décodage Huffman, une démultiplication inverse ou une transformation cosinus discrète, modifiée, inverse sur les données MP3.

13. Dispositif selon l'une des revendications 9 à 12,
**caractérisé en ce que**
la commande (4) commute le décodeur audio (9) dans un premier état pour le décodage MP2 pour que le décodeur audio (9) exécute un démultiplexage d'une exploitation de l'information latérale, une déquantification, une démultiplication inverse et un filtrage sur les données MP2, et la commande (4) du décodeur audio (9) est commutée dans un second état pour le décodage MP3 pour que le décodeur audio (9) assure le filtrage des données MP3.

14. Dispositif selon l'une des revendications 9 à 13,
**caractérisé en ce que**
le processeur (8) est un processeur RISC et comporte un processeur de signal numérique.

15. Dispositif selon la revendication 14,
**caractérisé en ce que**
le processeur (8) comporte des moyens pour effectuer une synchronisation dans le temps ou de la fréquence du récepteur (2).

16. Dispositif selon la revendication 14,
**caractérisé par**
une mémoire en amont du décodeur audio (9).
